(19) Europäisches Patentamt
European Patent Office
Office européen des brevets

(11) **EP 2 156 545 B1**

(12) **EUROPÄISCHE PATENTSCHRIFT**

(45) Veröffentlichungstag und Bekanntmachung des Hinweises auf die Patenterteilung:
**21.02.2018 Patentblatt 2018/08**

(21) Anmeldenummer: **08734988.2**

(22) Anmeldetag: **03.04.2008**

(51) Int Cl.:
***H02M 7/5395*** *(2006.01)*

(86) Internationale Anmeldenummer:
**PCT/EP2008/002647**

(87) Internationale Veröffentlichungsnummer:
**WO 2008/135125 (13.11.2008 Gazette 2008/46)**

(54) **PWM-UMRICHTER MIT SOLLSPANNUNGSKORREKTUR DURCH DIE NULLSYSTEMSPANNUNG ZUR REDUZIERUNG VON SCHALTVERLUSTEN UND DER VERMEIDUNG VON GERÄUSCHBILDUNG**

PWM RECTIFIER HAVING TARGET VOLTAGE CORRECTOR BY ZERO SYSTEM VOLTAGE FOR REDUCING SWITCHING LOSSES AND PREVENTING NOISE GENERATION

CONVERTISSEUR RÉGLÉ PAR LARGEUR D'IMPULSIONS POURVU D'UN CORRECTEUR DE TENSION THÉORIQUE PAR LA TENSION DU SYSTÈME DE SÉQUENCE DE PHASE NULLE POUR RÉDUIRE LES PERTES DE COMMUTATION ET EMPÊCHER LA GÉNÉRATION DE BRUIT

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **04.05.2007 DE 102007021368**

(43) Veröffentlichungstag der Anmeldung:
**24.02.2010 Patentblatt 2010/08**

(73) Patentinhaber: **SEW-EURODRIVE GmbH & Co. KG**
**76646 Bruchsal (DE)**

(72) Erfinder: **MARAHRENS, Klaus**
**76337 Waldbronn-Reichenbach (DE)**

(74) Vertreter: **Tüngler, Eberhard**
**Sew-Eurodrive GmbH & Co. KG**
**Abt. ECG**
**Ernst-Blickle-Straße 42**
**76646 Bruchsal (DE)**

(56) Entgegenhaltungen:
**EP-A- 1 148 629          DE-A1- 2 705 343**
**DE-A1- 4 434 342**

• **AHMET M HAVA ET AL: "A High-Performance Generalized Discontinuous PWM Algorithm" IEEE TRANSACTIONS ON INDUSTRY APPLICATIONS, IEEE SERVICE CENTER, PISCATAWAY, NJ, US, Bd. 34, Nr. 5, 1. Oktober 1998 (1998-10-01), XP011022442 ISSN: 0093-9994**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Steuerverfahren für einen pulsweitengesteuerten Umrichter.

Bei pulsweitengesteuerten Umrichtern, die mit hoher Schaltfrequenz betrieben werden, entstehen in deren Leistungshalbleiterschalter sehr hohe Schaltverlustleistungen, die die erreichbare Umrichterausgangsleistung im Vergleich zum Betrieb mit niedriger Schaltfrequenz erheblich reduziert. Umrichtergespeiste Motorantriebe, die einen geräuscharmen bzw. geräuschfreien Betrieb erfordern, werden mit Schaltfrequenzen von 16 kHz und darüber betrieben.

Aus der OS 27 05 343 ist ein Steuerverfahren für einen seibstgeführten, pulsgesteuerten Umrichter bekannt, das zur Klasse der Flattop-Verfahren zählt. Vorteil dieses Verfahrens ist die Reduktion der Schaltverluste der Leistungshalbleiterschalter. Bei diesem Verfahren führen immer nur zu jeweils zwei Ausgangsphasen gehörige Leistungsschalter Schalthandlungen aus, während die zur dritten Phase gehörigen Leistungshalbleiterschalter nur einen der zwei möglichen Schaltzustände annehmen. Erreicht wird dies, indem auf ein Soll-Spannungssystem ($U_{R,soll}$, $U_{S,soll}$, $U_{T,soll}$) ein sogenanntes maximales Nullspannungssystem ($U_{0,MAX}$, $U_{0,MAX}$, $U_{0,MAX}$) oder ein sogenanntes minimales Nullspannungssystem ($U_{0,MIN}$, $U_{0,MIN}$, $U_{0,MIN}$) addiert wird, wobei $U_{0,MAX} = U_Z/2 - \max(U_{R,soll}, U_{S,soll}, U_{T,soll})$ und $U_{0,MIN} = - U_Z/2 - \min(U_{R,soll}, U_{S,soll}, U_{T,soll})$ ist und $U_Z$ die Zwischenkreisspannung bezeichnet. Das resultierende Spannungssystem wird einem Pulsweitenmodulator zur Erzeugung von Schaltsignalen für die Leistungshalbleiterschalter zugeführt. Dabei sind alle Spannungen bezogen auf den Mittefabgriff der Gleichspannungsquelle $U_Z$ angegeben.

Der 360°-Winkelbereich des Ausgangsspannungszeigers wird dabei in Bereiche mit maximalem Nullspannungssystem ($U_{0,MAX}$, $U_{0,MAX}$, $U_{0,MAX}$) und minimalem Nullspannungssystem ($U_{0,MIN}$, $U_{0,MIN}$, $U_{0,MIN}$) aufgeteilt. Derartige Steuerverfahren werden auch als Flattop-Verfahren bezeichnet, weil jeweils in einem Phasenpotential Winkelbereiche mit entweder konstanter maximaler Spannung, also $+U_Z/2$, oder mit konstanter minimaler Spannung, also $-U_Z/2$, auftreten. Bei einer Ausdehnung der genannten Winkelbereiche über 30°, 60° oder 120° wird das zugehörige Steuerverfahren als 30°-Flattop-Verfahren, 60°-Flattop-Verfahren oder 120°Flattop-Verfahren bezeichnet.

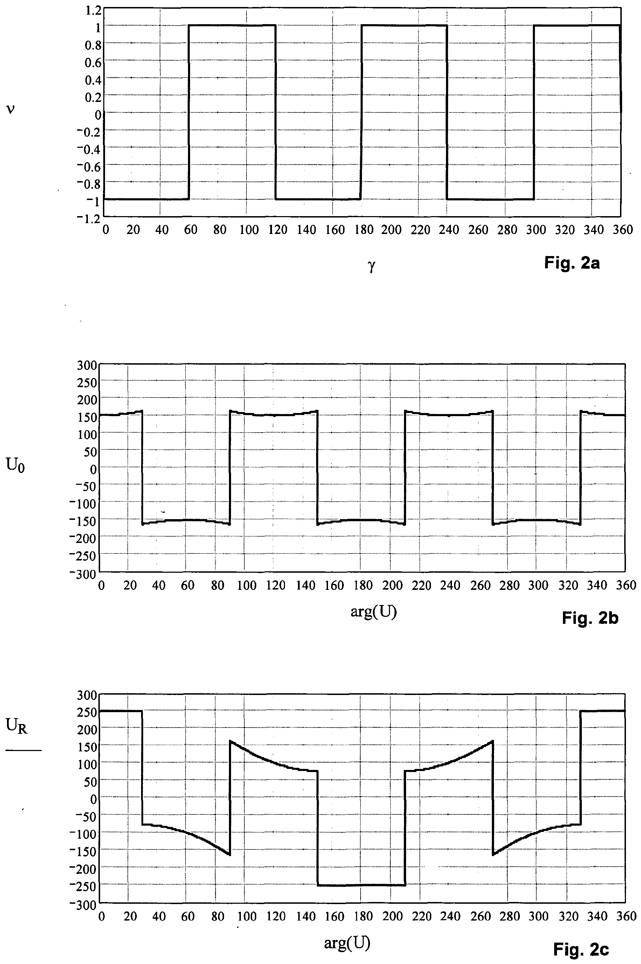

In der Figur 2 der OS 27 05 343 ist der Winkelbereich maximaler Nullspannungskomponente über 60° ausgedehnt. An diesen Winkelbereich schließt sich ein weiterer 60° Winkelbereich direkt an mit minimaler Nullspannungskomponente. In der Figur 2 weist der Verlauf sowohl der gezeigten Phasenspannung als auch des zugehörigen Nullspannungssystems Sprungstellen auf.

Der Verschiebungswinkel a in Figur 2 der OS 27 05 343 und zugehöriger Beschreibung ist auf 60° begrenzt. Es liegt dann ein 60°-Flattop-Verfahren vor, weil in den einzelnen Phasenpotentialen die Winkelbereiche mit maximaler bzw. minimaler Spannung sich über 60° ausdehnen. Wenn der Verschiebungswinkel a nicht auf den Bereich von 0° bis 60° begrenzt würde, entstünde ein unsymmetrisches Flattop-Verfahren, das kein 60°-Flattop-Verfahren ist, obwohl die Winkelbereiche mit maximalem bzw. minimalem Nullsystem sich unverändert über 60° ausdehnen.

Nachteilig ist beim Einsatz der genannten Verfahren, dass Sprungstellen im Nullspannungssystem Knackgeräusche erzeugen, die bei schneller Abfolge ein störendes Summen bzw. Piepsen des Motors verursachen. Diese Geräusche können auch nicht durch Wahl einer Schaltfrequenz von 16kHz oder höher beseitigt werden.

Bei Vollaussteuerung verschwinden bei manchen Flattop-Verfahren die Knackgeräusche, da Sprungstellen im Nullspannungssystem verschwinden, insbesondere bei einem jeweils zum Maximum oder Minimum einer Phase der Sollspannung symmetrisch angeordneten Winkelbereichen des 30°-Flattop-Verfahrens oder 60°-Flattop-Verfahrens.

Beim 120° Flattop-Verfahren weist die Nullspannungskomponente keine Sprungstellen auf. Von Nachteil ist jedoch, dass bei diesem Verfahren keine gleichmäßige Belastung der unteren und oberen Leistungshalbleiter auftritt. Außerdem ist die Verfälschung der Ausgangsspannung infolge der Totzeit und Durchlassspannung der Schaltelemente bei positiver und negativer Halbperiode der Ausgangsspannungen unterschiedlich.

Aus der DE 44 34 342 A1 ist ein Steuerverfahren und eine Vorrichtung zur Reduzierung von Durchlassspitzenwertverlusten in Leistungshalbleiterschaltern bekannt. Hierbei wird auf ein Soll-Spannungssystem ein Nullspannungssystem addiert und einem Pulsweitenmodulator zur Erzeugung von Schaltsignalen für die Leistungshalbleiterschalter zugeführt. Flattop-Verfahren werden in dieser Schrift nicht verwendet. Es wird lediglich ein sinus- oder dreieckförmiges Nullspannungssystem aufaddiert. Nachteilig ist dabei jedoch, dass dort keine Reduzierung der Schaltverluste erreicht wird, was auch nicht Aufgabe der dortigen Schrift ist.

Aus der EP 1 148 629 B1 ist ein Flattop-Verfahren bekannt, bei dem in einem ersten Winkelbereich ein maximales, in einem zweiten ein minimales Nullspannungssystem aufaddiert wird und in einem zwischen erstem und zweitem Winkelbereich liegenden dritten Winkelbereich ein dazwischen liegendes Nullspannungssystem aufaddiert wird. Auf diese Weise sind Geräusche reduzierbar, weil ein weicherer Übergang zwischen erstem und zweitem Winkelbereich erzeugbar ist. Störendes Piepsen und Summen sind vermeidbar.

**Aus der Veröffentlichung** AHMET M HAVA ET AL: "A High-Performance Generalized Discontinuous PWM Algorithm", IEEE TRANSACTIONS ON INDUSTRY APPLICATIONS, IEEE SERVICE Center, PISCATAWAY, NJ, US, Bd. 34, Nr. 5, 1. Oktober 1998, ISSN: 0093-9994 **ist ein Pulsweitenmodulationsverfahren bekannt.**

Der Erfindung liegt die Aufgabe zugrunde, Steuerverfahren für einen pulsweitengesteuerten Umrichter und eine Steuervorrichtung zur Durchführung dieses Steuerverfahrens weiterzubilden, wobei Schaltverluste in den steuerbaren Leistungshalbleiter-Schaltern eines pulsdauermodulierten Umrichters reduziert sind, ohne dass eine unerwünschte Geräuschbildung auftritt. Außerdem soll die Lösung kostengünstig sein.

Diese Aufgabe wird erfindungsgemäß mit einem Steuerverfahren für einen pulsweitengesteuerten Umrichter mit steuerbaren Leistungshalbleiterschaltern nach Anspruch 1 **oder 2** gelöst. Bevorzugte Ausführungsformen sind in den abhängigen Ansprüchen definiert. Wichtige Merkmale der Erfindung bei dem Steuerverfahren gemäß Anspruch 1 sind, dass es für einen pulsweitengesteuerten Umrichter mit steuerbaren Leistungshalbleiterschaltern vorgesehen ist, insbesondere zur Reduzierung von Schaltverlusten unter Vermeidung von Geräuschbildung,

wobei aus einem Spannungsraumzeiger, umfassend Betrag $|U|$ und Winkel $\arg(U)$, ein Soll-Spannungssystem ($U_{R,soll}$, $U_{S,soll}$, $U_{T,soll}$) gebildet wird,

und wobei ein Nullspannungssystem ($U_0$, $U_0$, $U_0$) aus dem Soll-Spannungssystem ($U_{R,soll}$, $U_{S,soll}$ $U_{T,soll}$), dem Winkel $\arg(U)$ und einem Steuerwinkel $\varphi$ gebildet wird,

und wobei das aus der Summe von Nullspannungssystem ($U_0$, $U_0$, $U_0$) und Soll-Spannungssystem ($U_{R,soll}$, $U_{S,soll}$, $U_{T,soll}$) resultierende Spannungssystem ($U_R$, $U_S$, $U_T$) einem Pulsweitenmodulator 2 zur Bildung der Steuersignale ($S_R$, $S_S$, $S_T$) für die Leistungshalbleiterschalter des Umrichters

zugeführt wird,

wobei

- erste Winkelbereiche, bei denen ein maximales Nullspannungssystem ($U_{0,MAX}$, $U_{0,MAX}$, $U_{0,MAX}$) aufsummiert wird, und
- zweite Winkelbereiche, bei denen ein minimales Nullspannungssystem ($U_{0,MIN}$, $U_{0,MIN}$, $U_{0,MIN}$) aufsummiert wird. zeitlich abwechselnd vorgesehen sind,
- wobei das Wechseln mit einer derart hohen Frequenz ausgeführt wird, dass

Zeitabschnitte aufeinander folgen, innerhalb derer zwei, drei oder mehr erste und zwei, drei oder mehr zweite Winkelabschnitte vorgesehen sind, wobei nur die Spannungswerte einer ersten und zweiten Phase des resultierenden Spannungssystems den Flattop-Bereich aufweisen, insbesondere also ihren betragsmäßig maximalen, insbesondere maximalen oder minimalen, Wert erreichen.

Somit ist der Flattop-Bereich, also der Bereich des Aufsummierens eines extremalen Nullspannungssystems, also maximalen oder minimalen, in Unterzeitabschnitte aufgeteilt, in denen zwei Phasen jeweils abwechselnd maximal ausgesteuert werden. Entsprechend sind dann die zu einer Phase zugehörigen Leistungsschalter der Endstufe des Umrichters während des zugeordneten Unterzeitabschnittes in einem unveränderten Schaltzustand. Hierdurch werden Schaltverluste zumindest während des Unterzeitabschnitts vermieden. Mittels des ständigen schnellen Wechsels der Unterzeitabschnitte wird die Einsparung bezüglich der Schaltverluste bei den Leistungsschaltern der ersten und zweiten Phase erzielt und nicht nur bei einer ersten Phase. Sogar bei der Ausgangsfrequenz Null des Umrichters wird zumindest zwischen zwei Phasen ständig mit der erwähnten hohen Frequenz gewechselt, so dass die Einsparung sich auch dann auf zwei Phasen aufteilt. Die Frequenz des Wechselns ist dabei unabhängig von der Ausgangsfrequenz wählbar.

Vorteil ist bei beiden Varianten, dass auch bei sehr niedrigen Drehzahlen des Elektromotors, also entsprechend niedriger Frequenz des Sollspannungssystems, eine gleichmäßigere Verteilung der Wärmebelastung der Leistungsschalter der Endstufe ermöglicht wird. Insbesondere ist bei einer sehr niedrigen Frequenz für einen ersten kleinen Zeitabschnitt, der dem Durchlaufen des ersten Winkelbereichs entspricht, eine Entlastung der Schalter für die erste Phase ausgeführt. Für den nächsten Zeitabschnitt, der dem Durchlaufen des zweiten Wickelbereichs entspricht, ist eine Entlastung der Schalter für die zweite Phase ausgeführt. Im nachfolgenden dritten Zeitabschnitt sind wiederum Entlastung der Schalter für die erste Phase erreichbar und so weiter. Auf diese Weise ist also statt der Entlastung der Schalter nur einer Phase, die bei sehr langsamer Frequenz erreichbar ist, eine Entlastung der Schalter mindestens zweier Phasen erreichbar.

Durch geeignetes Steuern der Frequenz des Wechselns ist also eine gesteuerte Verteilung der Schaltverluste auf die Schalter des Umrichters erreichbar. Dabei ist auch wichtig, dass die Frequenz des Wechselns unabhängig machbar ist von der Frequenz des Sollspannungssystems. Vorzugsweise ist sie eine Funktion von Parametern des Umrichters, wie beispielsweise einer thermischen Zeitkonstante für die Entwärmung der Leistungsschalter des Umrichters.

Alternativ wird die Aufgabe gelöst mit dem Steuerverfahren nach Anspruch 2. Dabei sind wichtige Merkmale, dass das Steuerverfahren für einen pulsweitengesteuerten Umrichter mit steuerbaren Leistungshalbleiterschaltern vorgesehen ist, insbesondere zur Reduzierung von Schaltverlusten unter Vermeidung von Geräuschbildung,

wobei aus einem Spannungsraumzeiger, umfassend Betrag $|U|$ und Winkel $\arg(U)$, ein Soll-Spannungssystem ($U_{R,soll}$, $U_{S,soll}$, $U_{T,soll}$) gebildet wird,

und wobei ein Nullspannungssystem ($U_0$, $U_0$, $U_0$) aus dem Soll-Spannungssystem ($U_{R,soll}$, $U_{S,soll}$, $U_{T,soll}$). dem Winkel $\arg(U)$ und einem Steuerwinkel $\varphi$ gebildet wird,

und wobei das aus der Summe von Nullspannungssystem ($U_0$, $U_0$, $U_0$) und Soll-Spannungssystem ($U_{R,soll}$, $U_{S,soll}$, $U_{T,soll}$) resultierende Spannungssystem ($U_R$, $U_S$, $U_T$) einem Pulsweitenmodulator 2 zur Bildung der Steuersignale ($S_R$, $S_S$, $S_T$) für die Leistungshalbleiterschalter des Umrichters
zugeführt wird,

wobei

- erste Winkelbereiche, bei denen ein maximales Nullspannungssystem ($U_{0,MAX}$, $U_{0,MAX}$, $U_{0,MAX}$) aufsummiert wird, und
- zweite Winkelbereiche, bei denen ein minimales Nullspannungssystem ($U_{0,MIN}$, $U_{0,MIN}$, $U_{0,MIN}$) aufsummiert wird,

zeitlich abwechselnd vorgesehen sind,
wobei das Wechseln mit einer Frequenz ausgeführt wird, die größer ist als der Reziprokwert der thermischen Zeitkonstante von elektronischen Leistungshalbleiterschaltern, insbesondere IGBT oder MOSFET, des Umrichters.

Durch Aufsummieren des maximalen Nullspannungssystem befindet sich die größte Spannung des resultierenden Spannungssystems ($U_R$, $U_S$, $U_T$) an der oberen Aussteuergrenze oder oberen Modulationsgrenze des Pulsweitenmodulators, aber nicht darüber; d.h. am Ausgang des Pulsweitenmodulators resultiert dann gerade ein Dauer-Ein-Zustand für das zur größten Spannung, beispielsweise $U_R$, zugehörige Steuersignal, also im Beispiel $S_R$. Das maximale Nullspannungssystem ist also derart maximal, dass sich zwar mindestens die größte Spannung an der Aussteuergrenze befindet, aber eine Übersteuerung und somit eine Verfälschung der Motor-Dreieckspannungen *($U_R$ - $U_S$, $U_S$ - $U_T$, $U_T$ - $U_R$)* vermieden ist.

Durch Aufsummieren des minimalen Nullspannungssystem befindet sich die kleinste Spannung des resultierenden Spannungssystems ($U_R$, $U_S$, $U_T$) an der unteren Aussteuergrenze oder unteren Modulationsgrenze des Pulsweitenmodulators, aber nicht darunter; d.h. am Ausgang des Pulsweitenmodulators resultiert dann gerade ein Dauer-AusZustand für das zur kleinsten Spannung zugehörige Steuersignal. Das minimale Nullspannungssystem ist also derart minimal, dass sich zwar mindestens die kleinste Spannung an der unteren Aussteuergrenze befindet, aber eine Unterschreitung dieser Aussteuergrenze, also betragsmäßige Übersteuerung, und somit eine Verfälschung der Motor-Dreieckspannungen vermieden ist.

Beim maximalen oder minimalen Nullspannungssystem handelt es sich dabei um eine zeitlich veränderliche Größe, die vom jeweiligen Soll-Spannungssystem ($U_{R,soll}$, $U_{S,soll}$, $U_{T,soll}$) abhängt, insbesondere für jede Pulsweitenmodulationsperiode jeweils zu bestimmen ist.

Von Vorteil ist bei der Erfindung, dass ein schneller Wechsel beim Aufaddieren des maximalen und minimalen Nullspannungssystems ausgeführt wird. Dabei ist wichtig, dass die Frequenz des Wechselns unabhängig machbar ist von der Frequenz des Sollspannungssystems sondern sie ist vorzugsweise eine Funktion von Parametern des Umrichters, wie beispielsweise einer thermischen Zeitkonstante für die Entwärmung der Leistungsschalter des Umrichters. Da die Frequenz des Wechselns in der Größenordnung dieser Zeitkonstante oder noch schneller ist, verläuft die Temperatur und somit die thermische Belastung der entlasteten Schalter gleichmäßiger. Denn es wird beispielsweise nach der Entlastung der Schalter der ersten Phase eine Entlastung der Schalter der zweiten Phase ausgeführt. Bevor jedoch die Temperatur der in diesem Zeitbereich nicht entlasteten Schalter der ersten Phase wesentlich reagieren kann, wird wiederum eine Entlastung der Schalter der ersten Phase ausgeführt und so weiter.

Auf diese Weise verläuft beispielsweise die Temperatur an der Gehäuseoberfläche der Schalter und auch im Inneren der Schalter gleichmäßiger. Hierdurch wird der thermische Stress an mechanischen Verbindungsstellen verringert und somit die Standzeit der Schalter erhöht. Je schneller die Frequenz des Wechselns gewählt ist, desto gleichmäßiger verläuft die Temperatur an der Gehäuseoberfläche der Schalter oder auch weiter im Inneren. Dadurch ist die Standzeit der Schalter erhöht.

Wie schon erläutert, ist die Höhe der Frequenz unabhängig von der Frequenz des Sollspannungssystems sondern wird durch Parameter des Umrichters bestimmt. Jedoch ist eine kleine Abweichung der realisierten Frequenz des Wechselns um die genannte Frequenz des Wechselns vorsehbar. Dabei ist vorzugsweise eine solche Abweichung, also Verstimmung, der Frequenz vorzuziehen, die eine einfachere Realisierung der Software ermöglicht. Beispielsweise ist die Verstimmung derart gewählt, dass ein Ganzzahliges Vielfaches der Frequenz des Sollspannungssystems vorgesehen wird. Der Verstimmungsbereich ist kleiner als 10%. In diesem geringen Umfang ist also eine Abhängigkeit von der Frequenz des Sollspannungssystems vorteilhaft. Durch geeignetes Steuern der Frequenz des Wechselns ist eine gesteuerte Verteilung der Schaltverluste auf die Schalter des Umrichters erreichbar.

Bei einer vorteilhaften Ausgestaltung ist die Frequenz kleiner als die Pulsweitenmodulationsfrequenz des Umrichters. Insbesondere ist die Frequenz des resultierenden Spannungssystems ($U_R$, $U_S$, $U_T$) kleiner als 5 Hertz, vorzugsweise kleiner als 0,5 Hertz. Von Vorteil ist dabei, dass bei solch niedrigen Umrichterausgangsfrequenzen über lange Zeitabschnitte trotzdem nicht nur die Schalter einer einzigen Phase sondern mehrerer Phasen entlastet werden. Insbesondere ist die Entlastung jeweiliger Schalter steuerbar.

Bei einer vorteilhaften Ausgestaltung ist die Frequenz des resultierenden Spannungssystems ($U_R$, $U_S$, $U_T$)

kleiner als der Reziprokwert der thermischen Zeitkonstante von elektronischen Leistungshalbleiterschaltern, insbesondere IGBT oder MOSFET, des Umrichters. Von Vorteil ist dabei, dass der Temperaturverlauf am und/oder im Schalter gleichmäßig ist. Somit ist die Standzeit der Schalter verlängerbar.

Bei einer vorteilhaften Ausgestaltung ist die Periodendauer des Wechselns ein ganzzahliges Vielfaches, insbesondere mindestens das Doppelte, der Pulsweitenmodulationsdauer des Umrichters. Insbesondere ist die Periodendauer des Wechselns ein ganzzahliges Vielfaches, insbesondere mindestens das Doppelte, der Pulsweitenmodulationsdauer des Umrichters. Von Vorteil ist dabei, dass die Realisierung der Software besonders einfach ist.

Bei einer vorteilhaften Ausgestaltung ist das Wechseln pulsweitenmoduliert steuerbar, insbesondere zum Steuern der Verteilung der Schaltverluste der elektronischen Leistungshalbleiterschalter des Umrichters, wobei die zugehörige Pulsweitenmodulationsfrequenz für dieses pulsweitenmoduliert gesteuerten Wechseln kleiner ist als die Pulsweitenmodulationsfrequenz des Umrichters. Von Vorteil ist dabei, dass ein besonders gutes Steuern der Verteilung der Schaltverluste auf die Schalter der Umrichter.

Bei einer vorteilhaften Ausgestaltung sind dritte Winkelbereiche vorgesehen, bei denen ein zwischen minimalem und maximalem Nullspannungssystem liegendes Nullspannungssystem aufsummiert wird, und wobei die ersten und die zweiten stets nur dritte Winkelbereiche zum Nachbarn haben.

Von Vorteil ist dabei, dass kein direkter Übergang von ersten zu zweiten Winkelbereichen vorliegt und damit auch kein Sprung vom minimalem zum maximalen Nullspannungssystem oder umgekehrt, wodurch Knackgeräusche, Summen oder Ähnliches verhindert oder zumindest vermindert wird. Außerdem ist das Verhalten des Nullspannungssystems in den dritten Winkelbereichen derart wählbar, dass die Spannungsänderung pro Zeit immer unter einem kritischen Wert bleibt, ab dem eine hörbare Geräuschbildung oder eine störende Geräuschbildung auftritt. Außerdem ist die Lösung kostengünstig als Software realisierbar. Darüber hinaus werden Schaltverluste in den steuerbaren Leistungshalbleiter-Schaltern eines pulsdauermodulierten Umrichters reduziert, ohne dass eine unerwünschte Geräuschbildung auftritt.

Bei einer vorteilhaften Ausgestaltung stellen die dritten Winkelbereiche einen quasistetigen Übergang von minimalem zum maximalem Nullspannungssystem und/oder umgekehrt dar. Von Vorteil ist dabei, dass keine Sprünge auftreten, mit Ausnahme der diskreten Spannungswerte bei einer zeitdiskreten Realisierung des Steuerverfahrens. Aufeinander folgende diskrete Spannungswerte weisen also in diesem Fall keine Differenzen auf, die den kritischen Wert für Spannungsänderung pro Zeitschritt überschreiten.

Bei einer vorteilhaften Ausgestaltung nimmt die Spannung $U_0$ des Nullspannungssystems ($U_0$, $U_0$, $U_0$) in den dritten Winkelbereichen diskrete Werte an, wobei zumindest die maximale Differenz als Kennwert zweier zeitlich aufeinander folgender Werte vorgebbar ist. Von Vorteil ist dabei, dass die maximale Differenz so klein wählbar ist, dass keine wesentliche Geräuschbildung auftritt.

Bei einer weiteren vorteilhaften Ausgestaltung dehnen sich die dritten Winkelbereiche jeweils über mindestens 3° und/oder maximal 30° aus. Besonders vorteilhaft ist eine Ausdehnung der dritten Winkelbereiche jeweils über 10°. Von Vorteil ist dabei, dass dabei ein Optimum unter Berücksichtigung der Reduzierung der Schaltverluste und der Reduzierung der Geräuschbildung gegeben ist.

Bei einer weiteren vorteilhaften Ausgestaltung wird der Steuerwinkel $\varphi$ von einer übergeordneten, strom- oder spannungsgeführten Steuerung vorgegeben. Von Vorteil ist dabei, dass er je nach Betriebszustand einstellbar ist.

Bei einer weiteren vorteilhaften Ausgestaltung wird der Steuerwinkel $\varphi$ konstant vorgegeben. Von Vorteil ist dabei, dass der Rechenaufwand stark reduziert ist.

Bei einer weiteren vorteilhaften Ausgestaltung wird der Steuerwinkel $\varphi$ als Funktion des Betriebszustands, wie motorischer oder generatorischer Betrieb, des Umrichters vorgegeben. Bei einer weiteren vorteilhaften Ausgestaltung ist der Steuerwinkel $\varphi$ eine Funktion des Winkels zwischen Strom-Raumzeiger und Spannungs-Raumzeiger. Von Vorteil ist dabei, dass ein optimaler Steuerwinkel in einfacher Weise bestimmbar ist. Außerdem ist für jeden Betriebszustand ein optimaler Steuerwinkel verwendbar.

Bei einer weiteren vorteilhaften Ausgestaltung weist die Funktion oder Funktionstabelle

- erste Winkelbereiche, bei denen ein maximales Nullspannungssystem ($U_{0,MAX}$, $U_{0,MAX}$, $U_{0,MAX}$) aufsummiert wird,
- zweite Winkelbereiche, bei denen ein minimales Nullspannungssystem ($U_{0,MIN}$, $U_{0,MIN}$, $U_{0,MIN}$) aufsummiert wird und
- dritte Winkelbereiche, bei denen ein zwischen minimalem und maximalem Nullspannungssystem liegendes Nullspannungssystem aufsummiert wird,

auf und die ersten und die zweiten haben stets nur dritte Winkelbereiche zum Nachbarn. Von Vorteil ist dabei, dass bei genügend schnellem zeitlichen Abtasten oder Auslesen von Werten zur Bildung der Nullspannung Zwischenwerte zwischen maximaler Nullspannung $U_{0,MAX}$ und minimaler Nullspannung $U_{0,MIN}$ verwendbar sind.

Bei einer weiteren vorteilhaften Ausgestaltung wird im Rechenwerk 7 die Spannung $U_0$ zur Bildung des Nullspannungssystems nach der Formel

$$U_0 = \frac{1}{2}\left[(v+1)\cdot\left(\frac{U_Z}{2} - \text{Max}\left(U_{R,\text{soll}}, U_{S,\text{soll}}, U_{T,\text{soll}}\right)\right) - (v-1)\cdot\left(\frac{-U_Z}{2} - \text{Min}\left(U_{R,\text{soll}}, U_{S,\text{soll}}, U_{T,\text{soll}}\right)\right)\right]$$

bestimmt, wobei $U_Z$ die Zwischenkreisspannung des Umrichters darstellt. Von Vorteil ist dabei, dass somit mittels einer einfachen Formel in kostengünstiger Weise eine geschlossene Lösung zur Bildung des Nullspannungssystems verwendbar ist.

Wichtige Merkmale der Erfindung bei der Steuervorrichtung zur Durchführung eines Steuerverfahrens sind, dass die Steuervorrichtung von einem pulsweitengesteuerten Umrichter mit steuerbaren Leistungshalbleiterschaltern umfasst wird, und dass ein Funktionsgenerator 1 aus einem Spannungsraumzeiger, umfassend Betrag |U| und Winkel arg(U), ein Soll-Spannungssystem ($U_{R,\text{soll}}$, $U_{S,\text{soll}}$, $U_{T,\text{soll}}$) bildet, und dass ein Rechenwerk 7 zusammen mit einem Funktionsspeicher 8 ein Nullspannungssystem ($U_0$, $U_0$, $U_0$) aus dem Soll-Spannungssystem ($U_{R,\text{soll}}$, $U_{S,\text{soll}}$, $U_{T,\text{soll}}$), dem Winkel arg(U) und einem Steuerwinkel $\varphi$ bildet, und dass ein Pulsweitenmodulator 2 aus der Summe von Nullspannungssystem ($U_0$, $U_0$, $U_0$) und Soll-Spannungssystem ($U_{R,\text{soll}}$, $U_{S,\text{soll}}$, $U_{T,\text{soll}}$) Schaltsignale für Leistungshalbleiterschalter bildet.

Von Vorteil ist dabei, dass durch Verwendung der beschriebenen Steuerverfahren ein Steuern der Verteilung der Schaltverluste ermöglicht ist und somit ein gleichmäßigerer Temperaturverlauf erreichbar ist.

Beim Zwischenschalten der dritten Winkelbereiche ist von Vorteil, dass kein direkter Übergang von ersten zu zweiten Winkelbereichen vorliegt und damit auch kein Sprung vom minimalem zum maximalen Nullspannungssystem oder umgekehrt vorliegt, wodurch kein Knackgeräusch, Summen oder anderes Geräusch entsteht. Außerdem ist das Verhalten des Nullspannungssystems in den dritten Winkelbereichen derart wählbar, dass die Spannungsänderung pro Zeit immer unter einem kritischen Wert bleibt, ab dem eine hörbare Geräuschbildung oder eine störende Geräuschbildung auftritt. Außerdem ist die Lösung kostengünstig als Software realisierbar. Darüber hinaus werden Schaltverluste in den steuerbaren Leistungshalbleiter-Schaltern eines pulsdauermodulierten Umrichters reduziert, ohne dass eine unerwünschte Geräuschbildung auftritt. Zusätzlich wird auch eine sonst bekannte Vorrichtung nur um die erfindungsgemäß notwendigen Mittel zur Bildung des Rechenwerks und Funktionsspeichers erweitert.

Bei einer weiteren vorteilhaften Ausgestaltung weist das Rechenwerk mindestens einen Minimalwertbildner und mindestens einen Maximalwertbildner auf. Bei einer weiteren vorteilhaften Ausgestaltung wird der Ausgangswert des Funktionsspeichers im Rechenwerk einem ersten und einem zweiten Addierer zugeführt. Bei einer weiteren vorteilhaften Ausgestaltung sind die Addierer derart gestaltet, dass für den Ausgangswert des ersten Addierers auf den Ausgangswert des Funktionsspeichers ein positiver Wert, wie 1 oder dergleichen, addiert wird und dass für den Ausgangswert des zweiten Addierers auf den Ausgangswert des Funktionsspeichers ein negativer Wert, wie -1 oder dergleichen, addiert wird und dass die Ausgangswerte der Addierer jeweils einem ersten und zweiten Multiplizierer zugeführt werden, wobei dem ersten Multiplizierer auch $U_Z/2$, vermindert um den Ausgangswert des Maximalwertbildners, zugeführt wird und wobei dem zweiten Multiplizierer auch $-U_Z/2$, vermindert um den Ausgangswert des Minimalwertbildners, zugeführt wird, und dass die Ausgangswerte der Multiplizierer einem Subtrahierer zugeführt werden und der Ausgang dieses Subtrahierers einem Multiplizierer oder einem Proportionalglied zur Bildung der Spannung $U_0$ zugeführt wird. Von Vorteil ist dabei, dass Standardmittel verwendet werden.

Weitere vorteilhafte erfindungsgemäße Ausgestaltungen ergeben sich aus den Unteransprüchen.

Die Erfindung wird nun anhand von Abbildungen näher erläutert:

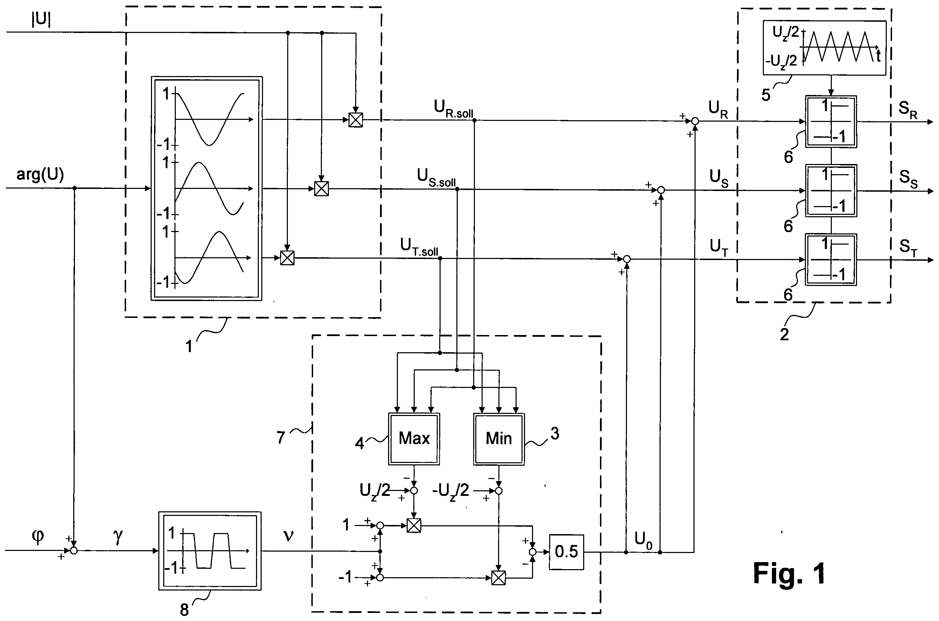

In der Figur 1 ist ein Blockdiagramm der erfindungsgemäßen Steuervorrichtung und des Steuerverfahrens dargestellt.

In der Figur 2a ist eine Sprünge aufweisende Wertetabelle des Funktionsspeichers 8 gezeigt, in der Figur 2b ist der zu Figur 2a gehörige Verlauf des Nullspannungssystems ($U_0$, $U_0$, $U_0$) gezeigt, wobei die Sollspannung einen kleinen Betrag hat. In der Figur 2c ist der daraus sich ergebende Spannungsverlauf der Phase R des resultierenden Spannungssystems gezeigt.

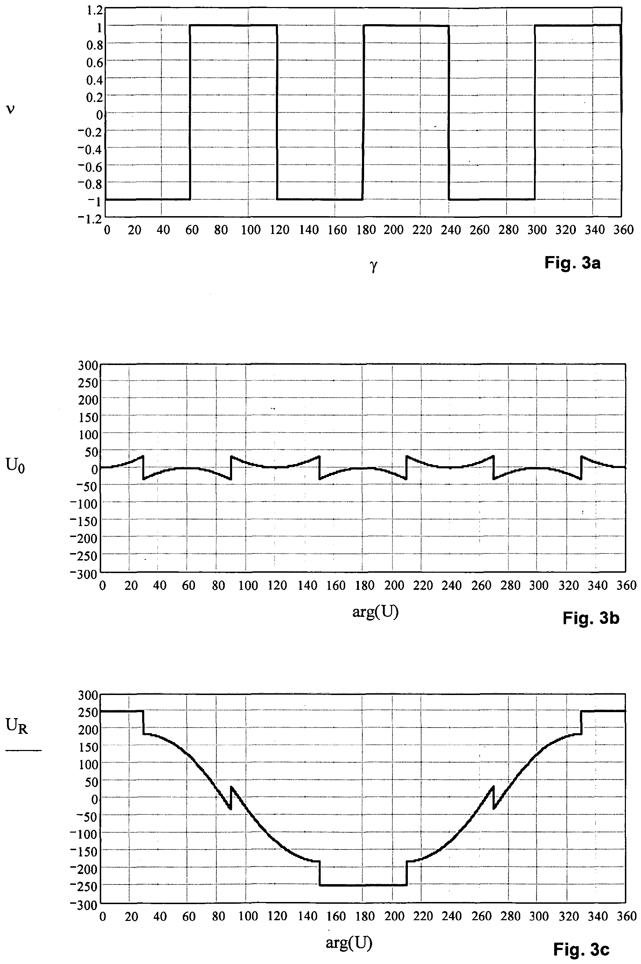

In der Figur 3a ist eine Sprünge aufweisende Wertetabelle des Funktionsspeichers 8 gezeigt, in der Figur 3b ist der zu Figur 3a gehörige Verlauf des Nullspannungssystems ($U_0$, $U_0$, $U_0$)gezeigt, wobei die Sollspannung einen großen Betrag hat. In der Figur 3c ist der daraus sich ergebende Spannungsverlauf der Phase R des resultierenden Spannungssystems gezeigt.

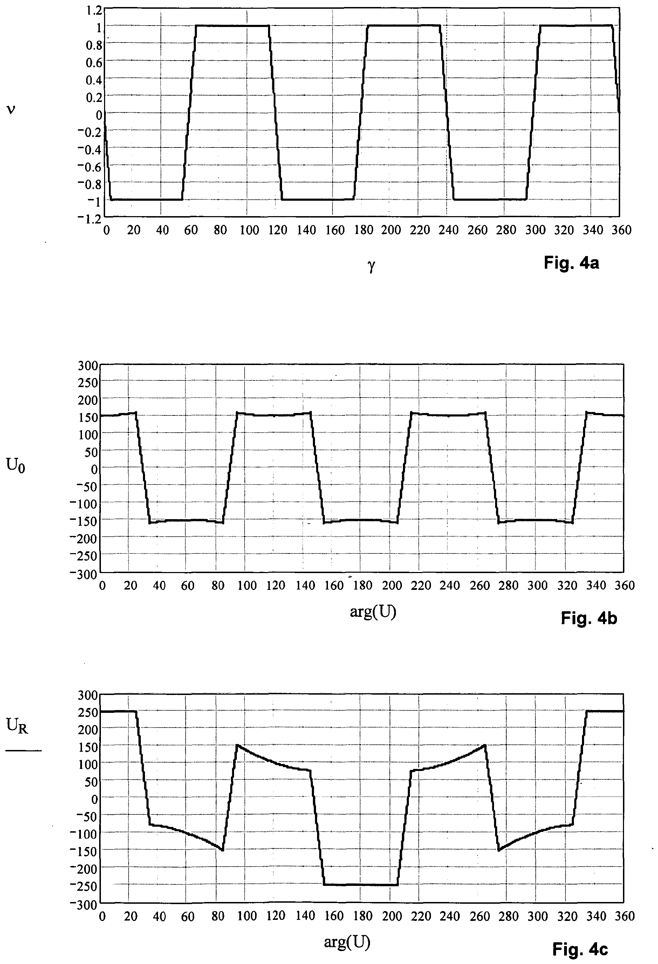

In der Figur 4a ist eine Wertetabelle des Funktionsspeichers 8 mit stetigem Funktionsverlauf gezeigt, in der Figur 4b ist der zu Figur 4a gehörige Verlauf des Nullspannungssystems ($U_0$, $U_0$, $U_0$) gezeigt, wobei die Sollspannung einen kleinen Betrag hat. In der Figur 4c ist der daraus sich ergebende Spannungsverlauf der Phase R des resultierenden Spannungssystems gezeigt.

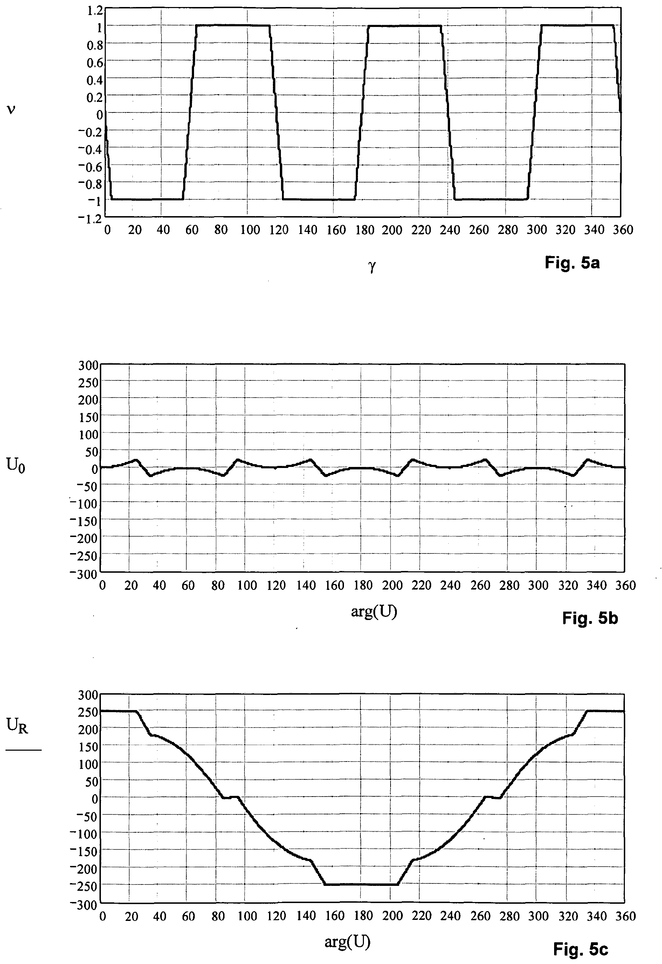

In der Figur 5a ist eine Wertetabelle des Funktionsspeichers 8 mit stetigem Funktionsverlauf gezeigt, in der Figur 5b ist der zu Figur 5a gehörige Verlauf des Nullspannungssystems ($U_0$, $U_0$, $U_0$) gezeigt, wobei die Sollspannung einen großen Betrag hat. In der Figur 5c ist der daraus sich ergebende Spannungsverlauf der Phase R des resultierenden Spannungssystems gezeigt.

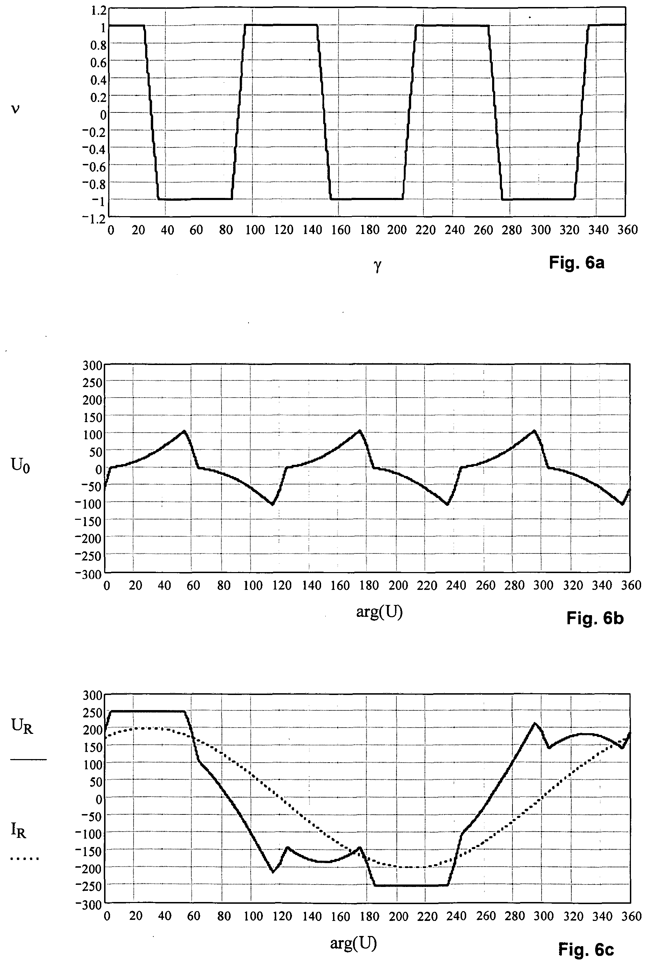

In der Figur 6a ist eine Wertetabelle des Funktionsspeichers 8 mit stetigem Funktionsverlauf gezeigt, in der Figur 6b ist der zu Figur 6a gehörige Verlauf des Nullspannungssystems ($U_0$, $U_0$, $U_0$) gezeigt, wobei die Sollspannung einen großen Betrag hat und ein optimierter Steuerwinkel verwendet wird. In der Figur 6c ist der daraus sich ergebende Spannungsverlauf der Phase R des resultierenden Spannungssystems gezeigt.

In der Figur 1 ist der wesentliche Teil der Steuervorrichtung und/oder des Steuerverfahrens bei einem erfindungsgemäßen Ausführungsbeispiel skizziert. Der Funktionsgenerator 1 bildet aus dem Spannungsraumzeiger, der durch Betrag |U| und Winkel arg(U) beschrieben wird, mittels Funktionstabellen, die beispielhaft einen sinusförmigen Verlauf beinhalten, ein Soll-Spannungssystem ($U_{R,soll}$, $U_{S,soll}$, $U_{T,soll}$), auf das ein Nullspannungssystem ($U_0$, $U_0$, $U_0$) aufsummiert wird. Das resultierende Spannungssystem ($U_R$, $U_S$, $U_T$) wird einem Pulsweitenmodulator 2 zugeführt. Zur Generierung der Schaltsignale ($S_R$, $S_S$, $S_T$) für die steuerbaren Leistungshalbleiterschalter des Umrichters wird hierzu die Dreieckspannung des Funktionsgenerators 5 von Komparatoren 6 mit dem resultierenden Spannungssystem ($U_R$, $U_S$, $U_T$) verglichen.

Der Funktionsgenerator 1 bildet bei dem erfindungsgemäßen Ausführungsbeispiel beispielhaft das Soll-Spannungssystem gemäß ($U_{R,soll}$, $U_{S,soll}$, $U_{T,soll}$) = (|U|*cos(arg(U)), |U|*cos(arg(U)-120°), |U|*cos(arg(U)-240°)).

Der Pulsweitenmodulator 2 wird derart betrieben, dass bei positiver und negativer Vollaussteuerung einer Phase des resultierenden Spannungssystems ($U_R$, $U_S$, $U_T$) keine Umschaltung des Schaltsignals innerhalb einer Modulationsperiode des Pulsweitenmodulators 2 stattfindet.

Das Nullspannungssystem ($U_0$, $U_0$, $U_0$) wird vom Rechenwerk 7 aus dem Soll-Spannungssystem ($U_{R,soll}$, $U_{S,soll}$, $U_{T,soll}$) und der Steuergröße $\nu$ gebildet. Die Steuergröße $\nu$ ergibt sich als Ausgangswert des Funktionsspeichers 8, der als Eingangswert die Größe $\gamma$ aufweist, die die Summe aus dem Winkel des Spannungs-Raumzeigers und aus dem Steuerwinkel $\varphi$ darstellt.

Der Steuerwinkel $\varphi$ wird von einer übergeordneten Regelung angeboten, die entweder spannungsgeführt oder stromgeregelt ausgeführt ist.

Im Funktionsspeichers 8 ist ein winkelabhängiger Funktionsverlauf mit einem Wertebereich abgelegt, dessen Werte einen Betrag kleiner oder gleich 1 aufweisen.

Das Rechenwerk 7 umfasst einen Minimalwertbildner 3 und einen Maximalwertbildner 4, die einen Minimalwert beziehungsweise einen Maximalwert aus dem Soll-Spannungssystem ($U_{R,soll}$, $U_{S,soll}$, $U_{T,soll}$) bilden. Die maximale Nullspannung wird aus der Differenz von $U_Z/2$ und dem gebildeten Maximalwert bestimmt. Ebenso wird die minimale Nullspannung wird aus der Differenz von $-U_Z/2$ und dem gebildeten Minimalwert bestimmt. Die maximale Nullspannung wird mit der um 1 vergrößerten Steuergröße $\nu$ multipliziert. Die minimale Nullspannung wird mit der um 1 verminderten Steuergröße $\nu$ multipliziert. Die Differenz der beiden Multiplikationsergebnisse ergibt nach Halbierung die Spannung $U_0$, aus dem das Nullspannungssystem ($U_0$, $U_0$, $U_0$) gebildet wird.

Vorteiligerweise sind bei weiteren Ausführungsbeispielen die An- und Abstiegsflanken der im Funktionsspeicher 8 eingegebenen Funktion. Sie verlaufen nicht senkrecht, also mit unendlicher Steigung, wie bei einem Schalter oder dergleichen, sondern mit einer endlichen Steigung. Somit grenzen also die Winkelbereiche maximaler oder minimaler Nullspannungskomponente nicht unmittelbar aneinander an, sondern sind durch zusätzliche Winkelbereiche endlicher Steigung voneinander getrennt, in denen ein stetiger Übergang von minimaler Nullspannungskomponente auf maximale Nullspannungskomponente und umgekehrt stattfindet.

Da die genannten Winkelbereiche im Vergleich zu den Bereichen mit maximaler und minimaler Nullspannungskomponente klein gewählt werden können, ergeben sich nur geringe Einbußen bei der Einsparung von Schaltverlusten. Besonders vorteilhaft ist aber die erzielte Unterdrückung der Geräuschbildung, da die erwähnten Knackgeräusche im Wesentlichen vermieden werden.

In diesen Winkelbereichen kann die skalare Spannung $U_0$ des Nullspannungssystems ($U_0$, $U_0$, $U_0$) Werte zwischen $U_Z/2$ oder $-U_Z/2$ annehmen. Bei einer analogen Ausführung des Steuerverfahrens ist ein stetiger Übergang vorteilhaft. Je, flacher die ansteigenden und abfallenden Flanken desto geringer ist die Geräuschbildung. Nachteilig bei dem langsamerem Ansteigen oder Abfallen der Flanken ist hingegen, dass der für die Flattop-Winkelbereiche zur Verfügung stehende Winkelbereich sich vermindert.

Bei einem zeitdiskret arbeitenden System werden viele Größen, wie beispielsweise auch die Größe $\gamma$, für jeden Zeitschritt neu berechnet. Insbesondere ist die Winkeldifferenz zweier aufeinanderfolgender Zeitschritte des Wertes arg(U) bei größerer Drehzahl größer. Die Steuergröße $\nu$ verhält sich in entsprechender Weise. Bei einem erfindungsgemäßen Ausführungsbeispiel beträgt die Zykluszeit, also die Zeitdifferenz zweier aufeinander folgender Zeitschritte, 250$\mu$s. Bei einem Winkelbereich für Zwischenwerte von 10° und einer elektrischen Frequenz bis 111 Hz ist gewährleistet, dass beim Übergang von maximalem auf minimales Nullspannungssystem mindestens für einen Zeitschritt ein Wert zwischen $U_Z/2$ und $-U_Z/2$ angenommen wird. Bei kleineren elektrischen Frequenzen wird für mehr Zeitschritte ein Zwischenwert angenommen.

Wichtig bei der Geräuschbildung ist der Kennwert 'Spannungsänderung pro Zeit' des zeitlichen Verlaufs von

$U_0$, da bei einer schnellen großen Spannungsänderung jeweils lautere Geräusche entstehen als bei einer langsamen kleinen Spannungsänderung pro Zeitschritt oder Zykluszeit des zeitdiskret arbeitenden Systems.

Bei sehr großen elektrischen Frequenzen wird üblicherweise die Eckdrehzahl und damit Spannungswerte nahe der Vollaussteuerung erreicht, weshalb in diesen Fällen die Spannungsänderung begrenzt ist, da sich dann maximales und minimales Nullspannungssystem nur geringfügig unterscheiden. Der Kennwert 'Spannungsänderung pro Zeit' bleibt dann ohnehin sehr klein. Zwischenwerte tragen dann nicht mehr wesentlich zur Reduzierung der Geräusche bei.

Bei einem erfindungsgemäßen Ausführungsbeispiel wird in der Funktionstabelle eine Ausdehnung von 10° für die Winkelbereiche mit Zwischenwerten gewählt. Dies stellt einen sehr guten Kompromiss zwischen Reduzierung der Schaltverluste und Geräuschentwicklung dar. Bei einem anderen erfindungsgemäßen Ausführungsbeispiel kann auch ein Winkelbereich von 3° bis 30° gewählt werden, wobei die Geräusche auch reduziert sind.

In einem besonders vorteilhaften Ausführungsbeispiel ist ein Wert für den Kennwert Spannungsänderung pro Zeit vorgebbar und wird zur Bestimmung des Verlaufs der Funktionstabelle verwendet.

Durch geeignete Wahl des Winkels $\varphi$ können die Flattop-Bereiche so verschoben werden, dass sie bezüglich der Ausgangsströme bestmöglich in der Nähe deren Maximums liegen, was die Effektivität bezüglich der Einsparung von Schaltverlusten steigert, insbesondere dann, wenn der Winkel fortwährend dem Betriebspunkt des Motors angepasst wird.

Dem Funktionsspeicher 8 ist ein Rechenwerk 7 nachgeschaltet, das die Spannung $U_0$ aus Momentanwerten des maximalen und minimalen Phasenpotentials, sowie der momentanen Zwischenkreisspannung $U_Z$ und dem Ausgangswert des Funktionsspeichers $\nu$ gemäß folgender Formel berechnet:

$$U_0 = \frac{1}{2}\left[(\nu+1)\cdot\left(\frac{U_Z}{2} - \text{Max}\left(U_{R.soll}, U_{S.soll}, U_{T.soll}\right)\right) - (\nu-1)\cdot\left(\frac{-U_Z}{2} - \text{Min}\left(U_{R.soll}, U_{S.soll}, U_{T.soll}\right)\right)\right]$$

Damit geht einher dass bei dem Wert $\nu = 1$, das maximale Nullspannungssystem ($U_{0,MAX}$, $U_{0,MAX}$, $U_{0,MAX}$) und dem Wert $\nu = -1$ das minimale Nullspannungssystem ($U_{0,MIN}$, $U_{0,MIN}$, $U_{0,MIN}$) auf das Soll-Spannungssystem ($U_{R,soll}$, $U_{S,soll}$, $U_{T,soll}$) addiert wird. Für Werte $\nu$ zwischen 1 und -1 nimmt die Nullspannung $U_0$ Werte zwischen $U_{0,MAX}$ und $U_{0,MIN}$ anteilig an. Das so gebildete Nullspannungssystem ($U_0$, $U_0$, $U_0$) wird auf das Soll-Spannungssystem ($U_{R,soll}$, $U_{S,soll}$, $U_{T,soll}$) addiert.

Bei weiteren erfindungsgemäßen Ausführungsbeispielen werden andere Formeln verwendet, die aber im Wesentlichen das gleiche Schaltverhalten zur Folge haben. Beispielsweise können alle in der obigen Formel verwendeten Werte gefiltert werden. Außerdem kann die Formel um Faktoren und/oder Summanden modifiziert werden, die bei einer diskreten Realisierung im Rahmen der Diskretisierung der Ausgangsgröße bleiben.

Ein weiterer Vorteil ist, dass bei dem erfindungsgemäßen Ausführungsbeispiel die bekannten Flattop-Verfahren sich als Sonderfälle ergeben, wenn entsprechende Funktionen im Funktionsspeicher 8 abgelegt werden. Wenn beispielsweise der Funktionsspeicher 8 für alle Werte von $\gamma$ den Wert $\nu = 0$ enthält, ergibt sich ein Steuerverfahren mit voller Spannungsausnutzung, das aber keine Flattops aufweist. Für die Wahl $\nu = -1$ oder $\nu = +1$ für alle Werte von $\gamma$ ergibt sich ein 120°Flattop-Verfahren.

In der Figur 2a ist eine Wertetabelle des Funktionsspeichers 8 mit sprunghaften Übergängen gezeigt, die einem schaltenden Verhalten entsprechen. Diese wird im Funktionsspeicher 8 hinterlegt und der Winkel $\varphi$ zu Null vorgegeben. Somit ergibt sich ein 60°-Flattop-Verfahren, bei welchem die Flattop-Winkelbereiche jeweils symmetrisch um ein Maximum oder ein Minimum einer Phase des Sollspannungssystems angeordnet sind. In der Figur 2b ist der zugehörige Verlauf der Spannung $U_0$ gezeigt, wobei der Betrag des Spannungsraumzeigers $|U| = 100V$, die Zwischenkreisspannung $U_Z=500V$ und der Steuerwinkel $\varphi=0°$ gewählt ist. In der Figur 2c ist der zugehörige Spannungsverlauf der Phase R des resultierenden Spannungssystems gezeigt. Der Modulationsgrad m wird aus dem Quotienten aus der Länge und der maximal möglichen Länge des modulierenden Spannungszeigers für ein sinusförmig moduliertes Drehspannungssystem gebildet und ist bei dem beschriebenen Ausführungsbeispiel m=0,35.

In den Figuren 3a, 3b, 3c sind dieselben entsprechenden Größen dargestellt wie bei den Figuren 2a, 2b, 2c, jedoch mit $|U| = 250V$. Daher zeigen auch alle Verläufe wiederum sprunghafte Übergänge oder Sprungstellen, die wiederum zur Erhöhung der Geräuschbildung beitragen ebenso wie bei des Figuren 2a, 2b, 2c. Der Modulationsgrad beträgt m = 0.87.

In der Figur 4a ist eine Wertetabelle des Funktionsspeichers 8 mit stetigen Übergängen gezeigt, die sich über jeweils 10° ausdehnen. Die Tabelle weist also auch eine nicht vernachlässigbare Menge von Zwischenwerten zwischen -1 und 1 auf. Je nach Drehzahl und je nach Zykluszeit bei einer zeitdiskreten Ausführung wird eine verschieden große Anzahl dieser Zwischenwerte verwendet. In der Figur 4b ist der zugehörige Verlauf der Spannung $U_0$ des Nullspannungssystems gezeigt, wobei $|U| = 100V$, $U_Z = 500V$ und $\varphi = 0°$ gewählt ist. Der Modulationsgrad beträgt m = 0,35.

In der Figur 4c ist wiederum der zu Figur 4a gehörige Spannungsverlauf der Phase R des resultierenden Spannungssystems gezeigt. Alle Verläufe der Figuren 4a, 4b, 4c weisen keine sprunghaften, sondern stetige Übergänge auf. In jedem Fall ist die Spannungsänderung pro Zeit unterhalb eines endlichen Grenzwertes und somit beschränkt. Die Geräuschbildung ist somit unterdrückt oder zumindest reduziert.

In den Figuren 5a, 5b, 5c sind dieselben entsprechenden Größen dargestellt wie bei den Figuren 4a, 4b, 4c, jedoch mit |U| = 250V. Wiederum zeigen alle Verläufe stetige Übergänge und bewirken somit ebenso eine Reduzierung der Geräuschbildung. Der Modulationsgrad beträgt m = 0,87.

In der Figur 6a ist wiederum eine Wertetabelle des Funktionsspeichers 8 mit stetigen Übergängen gezeigt, die sich über jeweils 10° ausdehnen. In der Figur 6b ist der zugehörige Verlauf der Spannung $U_0$ gezeigt, wobei |U| = 250V, $U_Z$= 500V und $\varphi$ = - 30° ist. Weiterhin ist in Figur 6c der Verlauf der Spannung $U_R$ der Phase R, sowie ein beispielhaft angenommener Verlauf des Stroms $I_R$ der Phase R gezeigt, der einen Phasenverschiebungswinkel von 30° gegenüber der Spannung $U_R$ aufweist. Der Steuerwinkel ist mit $\varphi$ = - 30° derart bestimmt, dass die Flattop-Winkelbereiche möglichst im Bereich der Maxima oder Minima des Stroms liegen. Dies ist deshalb günstig, weil die Schaltverluste der elektronischen Leistungshalbleiterschalter mit zunehmendem Strom anwachsen und im Flattop-Winkelbereich nicht geschaltet wird. Je mehr also die Flattop-Winkelbereiche im Bereich betragsmäßig großer Ströme liegen, desto größer ist auch die Reduzierung der Schaltverluste. Der Modulationsgrad beträgt m = 0,87. In der Figur 6c ist der zu Figur 6a gehörige Spannungsverlauf der Phase R des resultierenden Spannungssystems, die Lage der beschriebenen Flattop-Winkelbereiche und der Verlauf des Stroms der entsprechenden Phase R gezeigt.

Die Erfindung vereinigt also die Vorteile reduzierter Schaltverluste mit reduzierter Geräuschbildung.

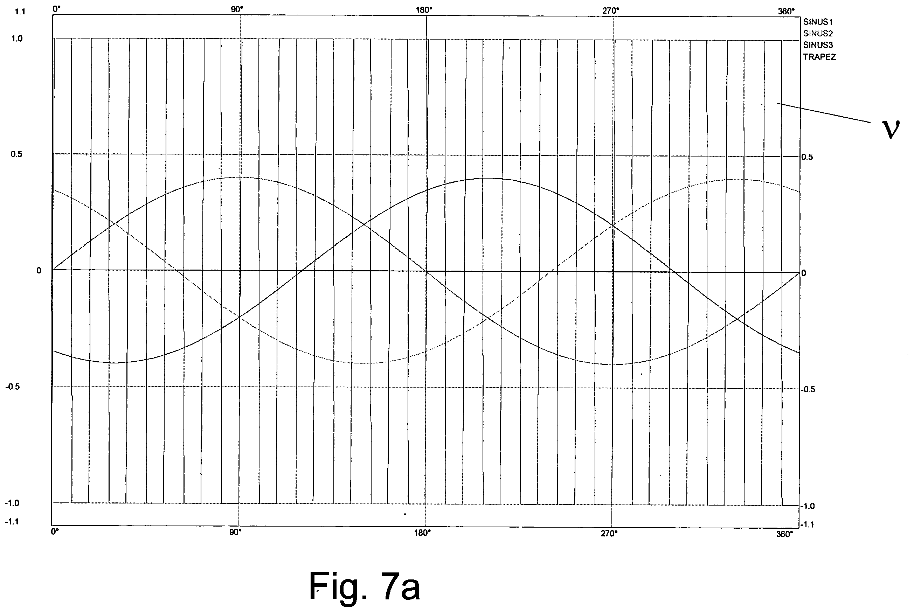

Bei der Erfindung wird für die Werte $\nu$ ein zeitlicher Verlauf vorgegeben, wobei in einem ersten erfindungsgemäßen Ausführungsbeispiel ein Rechtecksignal für den Wert $\nu$ vorgegeben wird, welches die Werte 1 und -1 abwechselnd annimmt, wie in Figur 7a dargestellt. Hierbei ist die Frequenz weit größer gewählt als die Frequenz der Spannungsverlauf der ebenfalls in Figur 7a dargestellten sinusförmigen Verläufe der Soll-Spannungen in den Phasen R, S, T, insbesondere größer als die dreifache Umrichterausgangsfrequenz, also größer als die dreifache Frequenz der Spannungsverläufe der Phasen R,S, T. In Figur 7a ist nur das Soll-Spannungssystem ($U_{R,soll}$, $U_{S,soll}$, $U_{T,soll}$) gezeigt; es ist also noch kein Nullspannungssystem berücksichtigt.

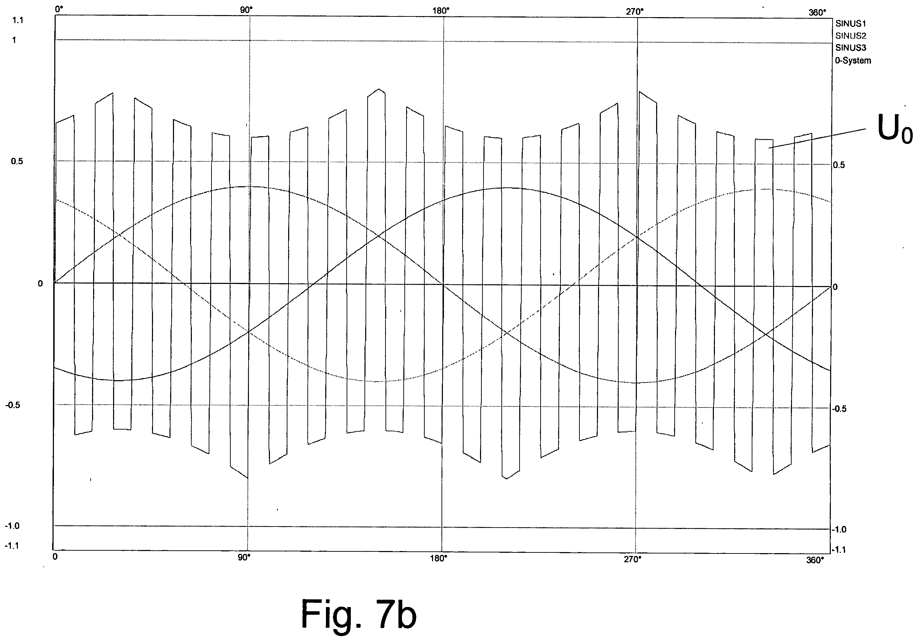

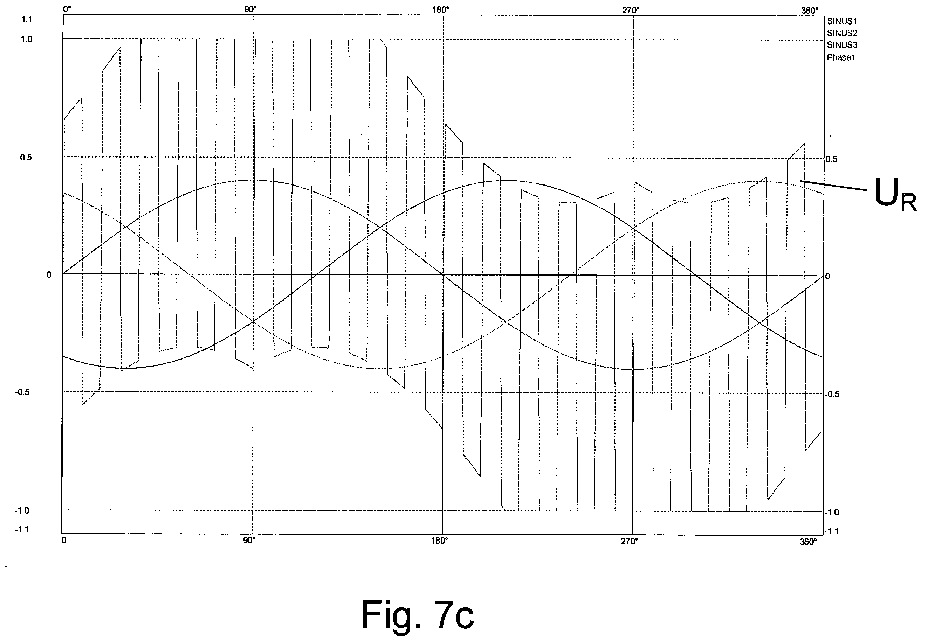

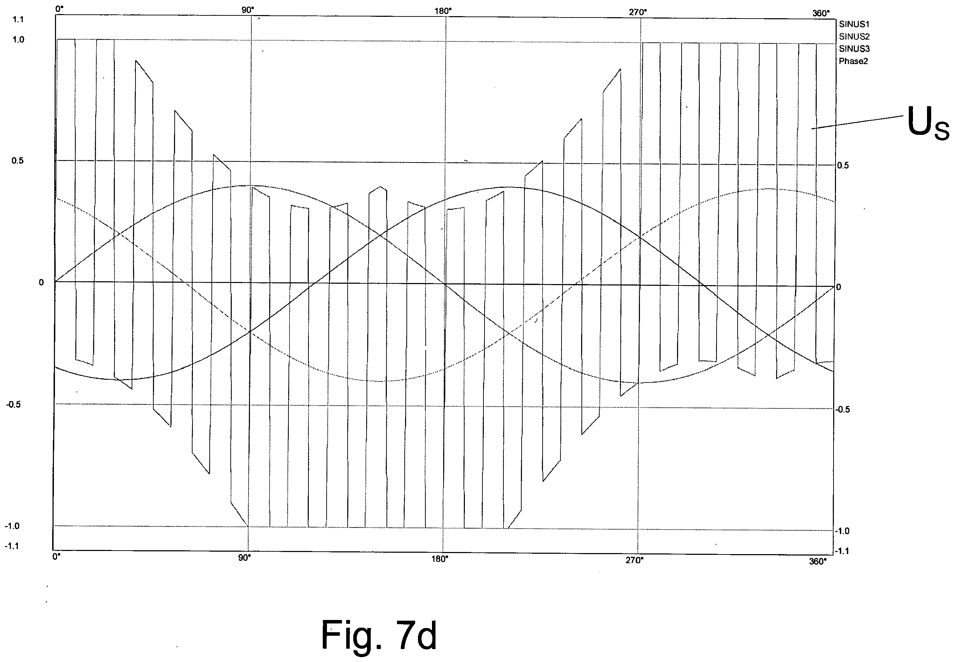

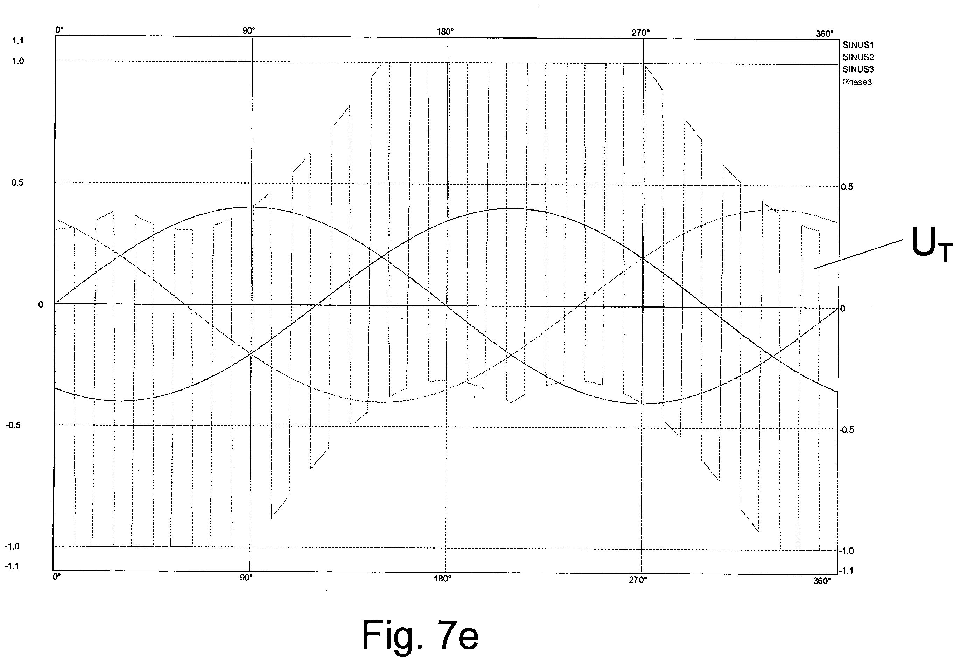

In Figur 7b ist das sich ergebende Nullspannungssystem gezeigt, wobei entsprechend dem Rechtecksignal zwischen dem bestimmten maximalen und dem bestimmten minimalen Nullspannungssystem gewechselt wird. Die Frequenz des Wechselns ist deutlich höher als die Frequenz der sinusförmigen Verläufe der Sollspannungen in den Phasen R, S, T, die ebenfalls in Figur 7b sowie den nachfolgenden Figuren 7c, 7d und 7e gezeigt sind.

In der Figur 7c ist für die Phase R der Verlauf der Spannung $U_R$ des resultierenden Spannungssystems ($U_R$, $U_S$, $U_T$) gezeigt. Dabei ist also das Nullspannungssystem zum Sollspannungssystem berücksichtigt, insbesondere addiert.

In entsprechender Darstellung ist in der Figur 7d ist für die Phase S der Verlauf der Spannung $U_S$ und in der Figur 7e der Verlauf der Spannung $U_T$ des resultierenden Spannungssystems ($U_R$, $U_S$, $U_T$) gezeigt.

Bei weiteren erfindungsgemäßen Ausführungsbeispielen ist die Frequenz des Rechtecksignals größer als der Reziprokwert der thermischen Zeitkonstante der Leistungshalbleiterschalter, welche in der Endstufe des Umrichters vorgesehen sind. Dabei sind je zwei der Schalter in Reihe geschaltet von der Zwischenkreisspannung versorgt, wobei am Mittelabgriff die jeweilige Phasenspannung zur Verfügung gestellt wird. Die Endstufe umfasst also drei solche Halbbrücken.

Außerdem ist die Frequenz des Rechtecksignals kleiner als die Pulsweitenmodulationsfrequenz des Umrichters. Diese beträgt beispielhaft 4 kHz, 8kHz oder 16kHz. Aber auch andere Frequenzwerte sind vorsehbar, insbesondere auch zeitlich variierende Frequenzverläufe.

In einem weiteren erfindungsgemäßen Ausführungsbeispiel ist die Periodendauer des Rechtecksignals ein ganzzahliges Vielfaches der Pulsweitenmodulationsdauer.

In einem weiteren erfindungsgemäßen Ausführungsbeispiel ist statt des Rechtecksignals ein modifiziertes Rechtecksignal verwendet, das stetige Übergänge zwischen den Werten 1 und -1 umfasst.

In einem weiteren erfindungsgemäßen Ausführungsbeispiel sind die Plateaus des Rechtecksignals mit den Plateauwerten 1 und -1 derart kurz ausgeführt, dass sie sogar verschwinden und somit das modifizierte Rechtecksignal einem Trapezsignal gleicht, wenn der stetige Übergangsbereich jeweils durch lineare Funktionen realisiert ist.

In einem weiteren erfindungsgemäßen Ausführungsbeispiel ist das Rechtecksignal oder modifizierte Rechtecksignal pulsweitenmoduliert vorgesehen. Auf diese Weise ist eine gesteuerte Verteilung der Schaltverluste auf die Schalter des Umrichters.

Bei weiteren erfindungsgemäßen Ausführungsbeispielen werden auch andere Umrichter, wie beispielswelse Multi-Level-Umrichter, eingesetzt.

**Bezugszeichenliste**

1    Funktionsgenerator
2    Pulsweitenmodulator
3    Minimalwertbildner
4    Maximalwertbildner
5    Funktionsgenerator für Dreieckspannung
6    Komparator
7    Rechenwerk
8    Funktionsspeicher

**Patentansprüche**

1.  Steuerverfahren für einen pulsweitengesteuerten Umrichter mit steuerbaren Leistungshalbleiterschaltern, insbesondere zur Reduzierung von Schaltverlusten unter Vermeidung von Geräuschbildung,
    wobei aus einem Spannungsraumzeiger, umfassend Betrag |U| und Winkel arg(U), ein Soll-Spannungssystem ($U_{R,soll}$, $U_{S,soll}$, $U_{T,soll}$) gebildet wird,
    und wobei ein Nullspannungssystem ($U_0$, $U_0$, $U_0$) aus dem Soll-Spannungssystem ($U_{R,soll}$, $U_{S,soll}$, $U_{T,soll}$), dem Winkel arg(U) und einem Steuerwinkel $\varphi$ gebildet wird,
    und wobei das aus der Summe von Nullspannungssystem ($U_0$, $U_0$, $U_0$) und Soll-Spannungssystem ($U_{R,soll}$, $U_{S,soll}$, $U_{T,soll}$) resultierende Spannungssystem ($U_R$, $U_S$, $U_T$) einem Pulsweitenmodulator 2 zur Bildung der Steuersignale ($S_R$, $S_S$, $S_T$) für die Leistungshalbleiterschalter des Umrichters
    zugeführt wird,
    wobei

    - erste Winkelbereiche, bei denen ein maximales Nullspannungssystem ($U_{0,MAX}$, $U_{0,MAX}$, $U_{0,MAx}$) aufsummiert wird, und
    - zweite Winkelbereiche, bei denen ein minimales Nullspannungssystem ($U_{0,MIN}$, $U_{0,MIN}$, $U_{0,MIN}$) aufsummiert wird,

    zeitlich abwechselnd vorgesehen sind,
    **dadurch gekennzeichnet, dass**

    - **das Wechseln mit einer derart hohen Frequenz ausgeführt wird, dass Zeitabschnitte aufeinander folgen, innerhalb derer zwei, drei oder mehr erste und zwei, drei oder mehr zweite Winkelabschnitte vorgesehen sind, wobei nur die Spannungswerte einer ersten und zweiten Phase des resultierenden Spannungssystems einen Flattop-Bereich aufweisen, das heißt den maximalen oder minimalen Wert erreichen.**

2.  Steuerverfahren für einen pulsweitengesteuerten Umrichter mit steuerbaren Leistungshalbleiterschaltern, insbesondere zur Reduzierung von Schaltverlusten unter Vermeidung von Geräuschbildung,
    wobei aus einem Spannungsraumzeiger, umfassend Betrag |U| und Winkel arg(U), ein Soll-Spannungssystem ($U_{R,soll}$, $U_{S,soll}$, $U_{T,soll}$) gebildet wird,
    und wobei ein Nullspannungssystem ($U_0$, $U_0$, $U_0$) aus dem Soll-Spannungssystem ($U_{R,soll}$, $U_{S,soll}$, $U_{T,soll}$), dem Winkel arg(U) und einem Steuerwinkel $\varphi$ gebildet wird,
    und wobei das aus der Summe von Nullspannungssystem ($U_0$, $U_0$, $U_0$) und Soll-Spannungssystem ($U_{R,soll}$, $U_{S,soll}$ $U_{T,soll}$) resultierende Spannungssystem ($U_R$, $U_S$, $U_T$) einem Pulsweitenmodulator 2 zur Bildung der Steuersignale ($S_R$, $S_S$, $S_T$) für die Leistungshalbleiterschalter des Umrichters
    zugeführt wird,
    wobei

    - erste Winkelbereiche, bei denen ein maximales Nullspannungssystem ($U_{0,MAX}$, $U_{0,MAX}$, $U_{0,MAX}$) aufsummiert wird, und
    - zweite Winkelbereiche, bei denen ein minimales Nullspannungssystem ($U_{0,MIN}$, $U_{0,MIN}$, $U_{0,MIN}$) aufsummiert wird,

    zeitlich abwechselnd vorgesehen sind,

    - **wobei das Wechseln mit einer Frequenz ausgeführt wird, die größer ist als der Reziprokwert der**

**thermischen Zeitkonstante von elektronischen Leistungshalbleiterschaltern, insbesondere IGBT oder MOSFET, des Umrichters.**

3. Steuerverfahren nach Anspruch 1 oder 2,
**dadurch gekennzeichnet, dass**
**die Frequenz unabhängig von der Ausgangsfrequenz des Umrichters vorgebbar ist,**
**und/oder** die Frequenz kleiner ist als die Pulsweitenmodulationsfrequenz des Umrichters
und/oder die Frequenz des resultierenden Spannungssystems ($U_R$, $U_S$, $U_T$) kleiner ist als 5 Hertz, insbesondere kleiner als 0,5 Hertz,
und/oder die Frequenz des resultierenden Spannungssystems ($U_R$, $U_S$, $U_T$) kleiner ist als der Reziprokwert der thermischen Zeitkonstante von elektronischen Leistungshalbleiterschaltern, insbesondere IGBT oder MOSFET, des Umrichters.

4. Steuerverfahren nach mindestens einem der vorangegangenen Ansprüche,
**dadurch gekennzeichnet, dass**
die Periodendauer des Wechselns ein ganzzahliges Vielfaches, insbesondere mindestens das Doppelte, der Pulsweitenmodulationsdauer des Umrichters ist
und/oder das Wechseln pulsweitenmoduliert steuerbar ist, insbesondere zum Steuern der Verteilung der Schaltverluste der elektronischen Leistungshalbleiterschalter des Umrichters, wobei die zugehörige Pulsweitenmodulationsfrequenz für dieses pulsweitenmoduliert gesteuerten Wechseln kleiner ist als die Pulsweitenmodulationsfrequenz des Umrichters.

5. Steuerverfahren nach mindestens einem der vorangegangenen Ansprüche,
**dadurch gekennzeichnet, dass**
dritte Winkelbereiche vorgesehen sind, bei denen ein zwischen minimalem und maximalem Nullspannungssystem liegendes Nullspannungssystem aufsummiert wird,
und wobei die ersten und die zweiten stets nur dritte Winkelbereiche zum Nachbarn haben.

6. Steuerverfahren nach mindestens einem der vorangegangenen Ansprüche,
**dadurch gekennzeichnet, dass**
die dritten Winkelbereiche einen quasistetigen Übergang von minimalem zum maximalem Nullspannungssystem und/oder umgekehrt darstellen
und/oder die Spannung $U_0$ des Nullspannungssystems ($U_0$, $U_0$, $U_0$) in den dritten Winkelbereichen diskrete Werte annimmt
und/oder zumindest die maximale Differenz zweier zeitlich aufeinander folgenden Werte als Kennwert vorgebbar ist
und/oder der Steuerwinkel $\varphi$ von einer übergeordneten, strom- oder spannungsgeführten Steuerung vorgegeben wird.

7. Steuerverfahren nach mindestens einem der vorangegangenen Ansprüche,
**dadurch gekennzeichnet, dass**
der Steuerwinkel $\varphi$ konstant vorgegeben wird
oder dass der Steuerwinkel $\varphi$ eine Funktion des Winkels zwischen Strom-Raumzeiger und Spannungs-Raumzeiger ist
und/oder dass der Steuerwinkel $\varphi$ auf einen Winkelbereich begrenzt wird.

8. Steuerverfahren nach mindestens einem der vorangegangenen Ansprüche,
**dadurch gekennzeichnet, dass**
ein Funktionsspeicher 8 aus der Summe von Steuerwinkel $\varphi$ und von arg(U) eine Steuergröße $\nu$ zur Beeinflussung des Nullspannungssystem ($U_0$, $U_0$, $U_0$) bildet unter Verwendung einer Funktion und/oder Funktionstabelle.

9. Steuerverfahren nach Anspruch 8, **dadurch gekennzeichnet, dass** die Funktion und/oder Funktionstabelle

- erste Winkelbereiche, bei denen ein maximales Nullspannungssystem ($U_{0,MAX}$, $U_{0,MAX}$, $U_{0,MAX}$) aufsummiert wird,
- zweite Winkelbereiche, bei denen ein minimales Nullspannungssystem ($U_{0,MIN}$, $U_{0,MIN}$, $U_{0,MIN}$) aufsummiert wird und
- dritte Winkelbereiche, bei denen ein zwischen minimalem und maximalem Nullspannungssystem liegendes Nullspannungssystem aufsummiert wird,

aufweist
und dass die ersten und die zweiten stets nur dritte Winkelbereiche zum Nachbarn haben.

**10.** Steuerverfahren nach Anspruch 8, **dadurch gekennzeichnet, dass** in einem Rechenwerk 7 die Spannung $U_0$ zur Bildung des Nullspannungssystems nach der Formel

$$U_0 = \frac{1}{2}\left[ (v+1)\cdot\left(\frac{U_z}{2} - Max\left(U_{R.soll}, U_{S.soll}, U_{T.soll}\right)\right) - (v-1)\cdot\left(\frac{-U_z}{2} - Min\left(U_{R.soll}, U_{S.soll}, U_{T.soll}\right)\right)\right]$$

bestimmt wird, wobei $U_Z$ die Zwischenkreisspannung des Umrichter darstellt.

**Claims**

**1.** Control method for a pulse-width-controlled converter with controllable power semiconductor switches, in particular for reducing switching losses while avoiding noise generation,
wherein a target voltage system ($U_{R.target}$, $U_{S.target}$, $U_{T.target}$) is formed from a voltage space vector, comprising magnitude |U| and angle arg(U),
and wherein a zero voltage system ($U_0$, $U_0$, $U_0$) is formed from the target voltage system ($U_{R.target}$, $U_{S.target}$, $U_{T.target}$), the angle arg(U) and a control angle $\varphi$,
and wherein the voltage system ($U_R$, $U_S$, $U_T$) resulting from the sum of zero voltage system ($U_0$, $U_0$, $U_0$) and target voltage system ($U_{R.target}$, $U_{S.target}$, $U_{T.target}$) is fed into a pulse-width modulator 2 for forming the control signals ($S_R$, $S_S$, $S_T$) for the power semiconductor switches of the converter,
wherein

- first angular regions, for which a maximum zero voltage system ($U_{0.MAX.}$, $U_{0.MAX.}$, $U_{0.MAX.}$) is summed, and
- second angular regions, for which a minimum zero voltage system ($U_{0.MIN.}$, $U_{0.MIN.}$, $U_{0.MIN.}$) is summed,
are provided alternating over time,

**characterised in that**

- the alternating is carried out at a frequency high enough that time segments follow one another, within which two, three or more first and two, three or more second angular segments are provided, wherein only the voltage values of a first and second phase of the resulting voltage system have a flat-top region, i.e. reach the maximum or minimum value.

**2.** Control method for a pulse-width-controlled converter with controllable power semiconductor switches, in particular for reducing switching losses while avoiding noise generation,
wherein a target voltage system ($U_{R.target}$, $U_{S.target}$, $U_{T.target}$) is formed from a voltage space vector, comprising magnitude |U| and angle arg(U),
and wherein a zero voltage system ($U_0$, $U_0$, $U_0$) is formed from the target voltage system ($U_{R.target}$, $U_{S.target}$, $U_{T.target}$), the angle arg(U) and a control angle $\varphi$,
and wherein the voltage system ($U_R$, $U_S$, $U_T$) resulting from the sum of zero voltage system ($U_0$, $U_0$, $U_0$) and target voltage system ($U_{R.target}$, $U_{S.target}$, $U_{T.target}$) is fed into a purse-width modulator 2 for forming the control signals ($S_R$, $S_S$, $S_T$) for the power semiconductor switches of the converter,
wherein

- first angular regions, for which a maximum zero voltage system ($U_{0.MAX.}$, $U_{0.MAX.}$, $U_{0.MAX.}$) is summed, and
- second angular regions, for which a minimum zero voltage system ($U_{0.MIN.}$, $U_{0.MIN.}$, $U_{0.MIN.}$) is summed,
are provided alternating over time,
- wherein the alternating is carried out at a frequency which is greater than the reciprocal value of the thermal time constant of electronic power semiconductor switches, in particular IGBT or MOSFET, of the converter.

**3.** Control method according to claim 1 or 2,
**characterised in that**
the frequency is predeterminable independently of the output frequency of the converter,
and/or the frequency is less than the pulse-width modulation frequency of the converter

and/or the frequency of the resulting voltage system ($U_R$, $U_S$, $U_T$) is less than 5 Hertz, in particular less than 0.5 Hertz, and/or the frequency of the resulting voltage system ($U_R$, $U_S$, $U_T$) is less than the reciprocal value of the thermal time constant of electronic power semiconductor switches, in particular IGBT or MOSFET, of the converter.

**4.** Control method according to at least one of the preceding claims,
**characterised in that**
the period duration of the alternating is an integral multiple of, in particular at least twice, the pulse-width modulation duration
and/or the alternating is controllable by pulse-width modulation, in particular for controlling the distribution of the switching losses of the electronic power semiconductor switches of the converter, wherein the associated pulse-width modulation frequency for this alternating controlled by pulse-width modulation is less than the pulse-width modulation frequency of the converter.

**5.** Control method according to at least one of the preceding claims,
**characterised in that**
third angular regions are provided, for which a zero voltage system lying between minimum and maximum zero voltage system is summed,
and wherein the first and the second always have only third angular regions for neighbours.

**6.** Control method according to at least one of the preceding claims,
**characterised in that**
the third angular regions represent a quasi-continuous transition from minimum to maximum zero voltage system and/or vice versa
and/or the voltage $U_0$ of the zero voltage system ($U_0$, $U_0$, $U_0$) assumes discrete values in the third angular regions and/or at least the maximum difference of two chronologically successive values is predeterminable as a characteristic value and/or the control angle $\varphi$ is predetermined by a higher-order, current- or voltage-guided control.

**7.** Control method according to at least one of the preceding claims,
**characterised in that**
the control angle $\varphi$ is predetermined constantly
or **in that** the control angle $\varphi$ is a function of the angle between current space vector and voltage space vector
and/or **in that** the control angle $\varphi$ is limited to an angular region.

**8.** Control method according to at least one of the preceding claims,
**characterised in that**
a function memory 8 forms, from the sum of control angle $\varphi$ and of arg(U), a control variable $\nu$ for influencing the zero voltage system ($U_0$, $U_0$, $U_0$), using a function and/or function table.

**9.** Control method according to claim 8,
**characterised in that**
the function and/or function table has

- first angular regions, for which a maximum zero voltage system ($U_{0.MAX.}$, $U_{0.MAX.}$, $U_{0.MAX.}$) is summed,
- second angular regions, for which a minimum zero voltage system ($U_{0.MIN.}$, $U_{0.MIN.}$, $U_{0.MIN.}$) is summed, and
- third angular regions, for which a zero voltage system lying between minimum and maximum zero voltage system is summed,

and **in that** the first and the second always have only third angular regions for neighbours.

**10.** Control method according to claim 8,
**characterised in that**
in an arithmetic unit 7, the voltage $U_0$ for forming the zero voltage system is determined according to the formula

$$U_0 = \frac{1}{2} \cdot \left[ (\nu + 1) \cdot \left( \frac{U_z}{2} - \text{Max}\left(U_{R.target}, U_{S.target}, U_{T.target}\right) \right) - (\nu - 1) \cdot \left( \frac{-U_z}{2} - \text{Min}\left(U_{R.target}, U_{S.target}, U_{T.target}\right) \right) \right]$$

where $U_z$ represents the intermediate circuit voltage of the converter.

**EP 2 156 545 B1**

**Revendications**

1. Procédé de commande pour un convertisseur commandé par largeur d'impulsion avec des commutateurs à semi-conducteurs de puissance commandables, en particulier pour réduire les pertes de commutation en évitant la production de bruit,
   dans lequel un système de tensions nominales ($U_{R,soll}$, $U_{S,soll}$, $U_{T,soll}$) est formé à partir d'un vecteur spatial de tension comprenant une norme |U| et un angle arg(U),
   et dans lequel un système de tensions nulles ($U_0$, $U_0$, $U_0$) est formé à partir du système de tensions nominales ($U_{R,soll}$, $U_{S,soll}$, $U_{T,soll}$), de l'angle arg(U) et d'un angle de commande $\varphi$,
   et dans lequel le système de tensions ($U_R$, $U_S$, $U_T$) résultant de la somme du système de tensions nulles ($U_0$, $U_0$, $U_0$) et du système de tensions nominales ($U_{R,soll}$, $U_{S,soll}$, $U_{T,soll}$) est amené à un modulateur de largeur d'impulsion 2 pour former les signaux de commande ($S_R$, $S_S$, $S_T$) pour les commutateurs à semi-conducteurs de puissance du convertisseur,
   dans lequel

   - de premières plages angulaires dans lesquelles un système de tensions nulles maximal ($U_{0,MAX}$, $U_{0,MAX}$, $U_{0,MAX}$) est additionné, et
   - de deuxièmes plages angulaires, dans lesquelles un système de tensions nulles minimal ($U_{0,MIN}$, $U_{0,MIN}$, $U_{0,MIN}$) est additionné,

   sont prévues alternativement dans le temps,
   **caractérisé en ce que**
   l'alternance est effectuée à une fréquence suffisamment élevée pour que se succèdent des intervalles de temps à l'intérieur desquels deux, trois ou plus premières et deux, trois ou plus deuxièmes plages angulaires sont prévues, seules les valeurs de tension d'une première et deuxième phase du système de tensions résultant présentant une zone de sommet plat, c'est-à-dire atteignant la valeur maximale ou minimale.

2. Procédé de commande pour un convertisseur commandé par largeur d'impulsion avec des commutateurs à semi-conducteurs de puissance commandables, en particulier pour réduire les pertes de commutation en évitant la production de bruit,
   dans lequel un système de tensions nominales ($U_{R,soll}$, $U_{S,soll}$, $U_{T,soll}$) est formé à partir d'un vecteur spatial de tension comprenant une norme |U| et un angle arg(U),
   et dans lequel un système de tensions nulles ($U_0$, $U_0$, $U_0$) est formé à partir du système de tensions nominales ($U_{R,soll}$, $U_{S,soll}$, $U_{T,soll}$), de l'angle arg(U) et d'un angle de commande $\varphi$,
   et dans lequel le système de tensions ($U_R$, $U_S$, $U_T$) résultant de la somme du système de tensions nulles ($U_0$, $U_0$, $U_0$) et du système de tensions nominales ($U_{R,soll}$, $U_{S,soll}$, $U_{T,soll}$) est amené à un modulateur de largeur d'impulsion 2 pour former les signaux de commande ($S_R$, $S_S$, $S_T$) pour les commutateurs à semi-conducteurs de puissance du convertisseur,
   dans lequel

   - de premières plages angulaires dans lesquelles un système de tensions nulles maximal ($U_{0,MAX}$, $U_{0,MAX}$, $U_{0,MAX}$) est additionné, et
   - de deuxièmes plages angulaires, dans lesquelles un système de tensions nulles minimal ($U_{0,MIN}$, $U_{0,MIN}$, $U_{0,MIN}$) est additionné,

   sont prévues alternativement dans le temps,

   - l'alternance étant effectuée à une fréquence qui est supérieure à la valeur réciproque de la constante de temps thermique de commutateurs à semi-conducteurs de puissance, en particulier d'IGBT ou de MOSFET, du convertisseur.

3. Procédé de commande selon la revendication 1 ou 2,
   **caractérisé en ce que**
   la fréquence peut être définie indépendamment de la fréquence de sortie du convertisseur,
   et/ou la fréquence est inférieure à la fréquence de modulation de largeur d'impulsion du convertisseur
   et/ou la fréquence du système de tensions résultant ($U_R$, $U_S$, $U_T$) est inférieure à 5 hertz, en particulier inférieure à 0,5 hertz,
   et/ou la fréquence du système de tensions résultant ($U_R$, $U_S$, $U_T$) est inférieure à la valeur réciproque de la constante de temps thermique de commutateurs à semi-conducteurs de puissance, en particulier d'IGBT ou de MOSFET, du convertisseur.

4. Procédé de commande selon au moins l'une des revendications précédentes,
**caractérisé en ce que**
la durée de période de l'alternance est un multiple entier, en particulier au moins le double, de la durée de modulation de largeur d'impulsion
et/ou l'alternance peut être commandée par modulation de largeur d'impulsion, en particulier pour commander la répartition des pertes de commutation des commutateurs à semi-conducteurs de puissance électroniques du convertisseur, la fréquence de modulation de largeur d'impulsion associée à cette alternance commandée par modulation de largeur d'impulsion étant inférieure à la fréquence de modulation de largeur d'impulsion du convertisseur.

5. Procédé de commande selon au moins l'une des revendications précédentes,
**caractérisé en ce que**
de troisièmes plages angulaires sont prévues, dans lesquelles un système de tensions nulles situé entre les systèmes de tensions nulles minimal et maximal est additionné,
et dans lequel les premières et deuxièmes plages angulaires n'ont toujours pour voisines que des troisièmes plages angulaires.

6. Procédé de commande selon au moins l'une des revendications précédentes,
**caractérisé en ce que**
les troisièmes plages angulaires représentent une transition quasi continue du système de tensions nulles minimal au système de tensions nulles maximal et/ou inversement et/ou la tension $U_0$ du système de tensions nulles ($U_0$, $U_0$, $U_0$) prend des valeurs discrètes dans les troisièmes plages angulaires
et/ou au moins la différence maximale entre deux valeurs successives dans le temps peut être définie en tant que valeur caractéristique
et/ou l'angle de commande $\varphi$ est défini par une commande maître, commandée par courant ou par tension.

7. Procédé de commande selon au moins l'une des revendications précédentes,
**caractérisé en ce**
**que** l'angle de commande $\varphi$ est fixé à une valeur constante
ou que l'angle de commande $\varphi$ est une fonction de l'angle entre le vecteur spatial de courant et le vecteur spatial de tension
et/ou que l'angle de commande $\varphi$ est limité à une plage angulaire.

8. Procédé de commande selon au moins l'une des revendications précédentes,
**caractérisé en ce**
**qu'**une mémoire de fonctions 8 forme à partir de la somme de l'angle de commande $\varphi$ et de arg(U), en utilisant une fonction et/ou une table de fonctions, une grandeur de commande $\nu$ pour influencer le système de tensions nulles ($U_0$, $U_0$, $U_0$).

9. Procédé de commande selon la revendication 8,
**caractérisé en ce**
**que** la fonction et/ou la table de fonctions présente

   - des premières plages angulaires dans lesquelles un système de tensions nulles maximal ($U_{0,MAX}$, $U_{0,MAX}$, $U_{0,MAX}$) est additionné,
   - des deuxièmes plages angulaires dans lesquelles un système de tensions nulles minimal ($U_{0,MIN}$, $U_{0,MIN}$, $U_{0,MIN}$) est additionné et
   - des troisièmes plages angulaires dans lesquelles un système de tensions nulles situé entre les systèmes de tensions nulles minimal et maximal est additionné,

et **que** les premières et deuxièmes plages angulaires n'ont toujours pour voisines que des troisièmes plages angulaires.

10. Procédé de commande selon la revendication 8,
**caractérisé en ce**
**que** dans l'unité de calcul 7, la tension $U_0$ utilisée pour former le système de tensions nulles est déterminée selon la formule

$$U_0 = \frac{1}{2}\left[ (v+1)\cdot\left(\frac{U_z}{2} - \max\left(U_{R,soll}, U_{S,soll}, U_{T,soll}\right)\right) - (v-1)\cdot\left(\frac{-U_z}{2} - \min\left(U_{R,soll}, U_{S,soll}, U_{T,soll}\right)\right)\right]$$

dans laquelle $U_z$ représente la tension de circuit intermédiaire du convertisseur.

**Fig. 1**

$\nu$

**Fig. 2a**

$\gamma$

$U_0$

arg(U)

**Fig. 2b**

$U_R$
———

arg(U)

**Fig. 2c**

Fig. 3a

arg(U)

Fig. 3b

arg(U)

Fig. 3c

19

Fig. 4a

arg(U)

Fig. 4b

arg(U)

Fig. 4c

ν

**Fig. 5a**

$U_0$

arg(U)

**Fig. 5b**

$U_R$
___

arg(U)

**Fig. 5c**

ν

Fig. 6a

γ

$U_0$

arg(U)

Fig. 6b

$U_R$
———

$I_R$
· · · · ·

arg(U)

Fig. 6c

22

Fig. 7a

Fig. 7b

Fig. 7c

Fig. 7d

Fig. 7e

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO OS2705343 A
- DE 4434342 A1
- EP 1148629 B1

**In der Beschreibung aufgeführte Nicht-Patentliteratur**

- A High-Performance Generalized Discontinuous PWM Algorithm. **AHMET M HAVA et al.** IEEE TRANSACTIONS ON INDUSTRY APPLICATIONS. IEEE SERVICE Center, 01. Oktober 1998, vol. 34